# EUROPEAN PATENT SPECIFICATION

(11) **EP 2 762 334 B1**
(45) Date of publication and mention of the grant of the patent: **13.03.2019**
(21) Application number: 14152435.5
(22) Date of filing: 24.01.2014
(51) Int. Cl.: B60C 11/11

(54) **Motorcycle tire for running on rough terrain**
Motorradreifen zum Fahren auf unebenem Gelände
Pneu de motocyclette pour terrains accidentés

(30) Priority: 30.01.2013 JP 2013015966
(43) Date of publication of application: 06.08.2014
(73) Proprietor: SUMITOMO RUBBER INDUSTRIES LIMITED, Kobe-shi, Hyogo-ken (JP)
(72) Inventor: Maeda, Yohei, Kobe-shi, Hyogo-ken, 651-0072 (JP)
(74) Representative: Manitz Finsterwald Patentanwälte PartmbB

(56) References cited:
- EP-A1- 2 529 954
- EP-A1- 2 682 283
- US-A1- 2012 024 443
- US-A1- 2012 160 381
- US-S1- D 592 587

## Description

### Background of the Invention

The present invention relates to a motorcycle tire suitable for running on rough terrain, more particularly to a block tread pattern improved in the arrangement and configurations of the blocks. The features of the preamble of the independent claim are known from EP 2 529 954 A1. Related technologies are known from US 2012/024443 A1, EP 2 682 283 A1, and US 2012/160381 A1.

Motorcycle tires for running on rough terrain for example used in motocross races and the like are provided in the tread portion with a plurality of blocks in order to increase the traction and cornering force and improve the handling and stability of the motorcycle.

US Patent application publication No. 2012-0160381-A1 discloses a motorcycle tire for running on rough terrain provided with a block pattern comprising crown blocks arranged along the tire equator, shoulder blocks arranged along each tread edge, and middle blocks arranged circumferentially of the tire between the crown blocks and the shoulder blocks. The crown blocks are each provided with a circumferentially extending slit. In the tire circumferential direction, the middle blocks are positioned between the crown blocks without overlapping the crown blocks. The motorcycle tire is improved in the cornering performance without sacrificing the traction performance and braking performance during straight running. However, it is difficult for such tire to exert excellent running performance on both soft road surfaces (mud, sand, soil, etc.) and hard road surfaces (packed soil, gravel, etc.). For example, if the blocks are decreased in the area of the ground contacting top surface thereof the traction performance and cornering performance on soft road surfaces may be improved. But, another problem of chipping off of the blocks become liable to occur during running on hard road surfaces.

### Summary of the Invention

It is therefore, an object of the present invention to provide a motorcycle tire suitable for running on rough terrain which can bring out excellent running performance on both soft road surfaces and hard road surfaces.

According to the present invention as defined in the independent claim, a motorcycle tire suitable for running on rough terrain comprises
a tread portion provided with a plurality of blocks protruding from a bottom of the tread portion to define a block tread pattern, wherein the blocks include crown blocks, middle block and shoulder blocks,
the crown blocks are disposed in a tread crown region centered on the tire equator and having a developed width of 1/3 of the developed tread width,
the shoulder blocks are disposed in a pair of tread shoulder regions extending toward the tire equator from respective tread edges and each having a developed width of 1/6 of the developed tread width, and
the middle blocks are disposed in a pair of tread middle regions between the tread crown region and the shoulder regions, each of the blocks has a top face and a sidewall face, the sidewall face extending radially inwardly from the edge of the top face and continued to the bottom of the tread portion, wherein
the crown blocks and the middle blocks are arranged such that at least part of the sidewall face of each of the middle blocks overlaps with the sidewall face of one of the crown blocks in the tire circumferential direction,
the top face of each of the crown blocks has an axially long rectangular shape having an circumferential length and an axial width more than the circumferential length,
the top face of each of the middle blocks has a substantially pentagonal shape having
an axially inner side extending in the tire circumferential direction,
a pair of transverse sides extending axially outwardly from the axially inner side and inclined so that the circumferential length of the top face of the middle block is gradually increased, and
a pair of axially outer sides extending axially outwardly from the axially outer ends of the transverse sides and inclined so that the circumferential length of the top face of the middle block is gradually decreased.

The motorcycle tire according to the present invention is provided with the following feature (1) and can be provided with the following features (2)-(6):
(1) the number Ns of the shoulder blocks in each tread shoulder region is more than the number Nc of the crown blocks and more than the number Nm of the middle blocks in each tread middle region;
(2) the top face of the shoulder block has a substantially pentagonal shape having
   an axially outer side extending in the tire circumferential direction,
   a pair of transverse sides extending axially inwardly from the axially outer side and inclined so that the circumferential direction length of the top face of the shoulder block is gradually decreased,
   a pair of axially inner sides extending from the axial inner ends of the two transverse sides and inclined steeply than the transverse sides with respect to the tire axial direction so that the circumferential length of the shoulder block is gradually decreases;
(3) the middle block is provided with a chamfer portion at a corner between a transverse sidewall face extending radially inwardly from each of the transverse sides and an inside sidewall face of the block extending radially inwardly from said axially inner side;
(4) the middle block is provided with a groove extending from the axially outer side toward the tire equator and terminating within the middle block;
(5) the shoulder block is provided with a groove extending from the axially outer side toward the tire equator and terminating within the shoulder block;
(6) the bottom of the tread portion is provided with tie bars protruding radially outwardly from the bottom of the tread portion and connecting between the sidewall faces of the middle blocks and the sidewall faces of the shoulder blocks.

According to the present invention, therefore, each of the crown blocks and two middle blocks on both sides thereof are substantially aligned in the tire axial direction, and function like a large block extending over the tread crown region and tread middle regions. As a result, when running on soft road surfaces, soil and mud adhered to the tread portion is lessened and running performance on soft road surfaces can be improved.

The axially long rectangular crown blocks can improve the traction performance and brake performance of the tire when running on hard road surfaces.

The middle blocks having the pentagonal top face can increase the rigidity of the block in its axially outside portion, and the cornering performance on soft road surfaces and hard road surfaces can be improved.

As the circumferential length of the middle block is gradually decreased axially outwardly from the axially outer ends of the transverse sides, a sudden change in the rigidity of the block in its axially outside portion can be prevented, therefore, sudden skidding during cornering on hard road surfaces can be prevented, and further chipping off of the middle blocks can be prevented.

As the middle blocks contact with the ground at least partially when the camber angle is zero, the middle blocks can improve the handling and stability on soft road surfaces in initial stage of cornering when the leaning of the motorcycle is initiated from the straight running state, and also prevent chipping off of the crown blocks during running straight on hard road surfaces.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia),STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

### Brief Description of the Drawings

Fig.1 is a cross sectional view of a motorcycle tire according to the present invention in its normally inflated unloaded condition, taken along line A-A of Fig.2.
Fig.2 is a developed view of the tread portion thereof.
Fig.3 is a cross sectional view of the motorcycle tire in its normally inflated loaded condition, at the camber angle of zero.
Fig.4 is a perspective view of a middle block.
Fig.5 is a plan view of the middle block.
Fig.6 is a cross sectional view taken along line B-B in Fig.4.
Fig.7 is a perspective view of a shoulder block.
Fig.8 is a plan view of the shoulder block.
Fig.9 is a cross sectional view taken along line C-C of Fig.8.
Fig.10 is a developed view of the tread portion of a comparative example tire.
Fig.11 is a developed view of the tread portion of a comparative example tire.
Fig.12 is a developed view of the tread portion of a comparative example tire.

### Description of the Preferred Embodiments

Embodiments of the present invention will now be described in detail in conjunction with the accompanying drawings.

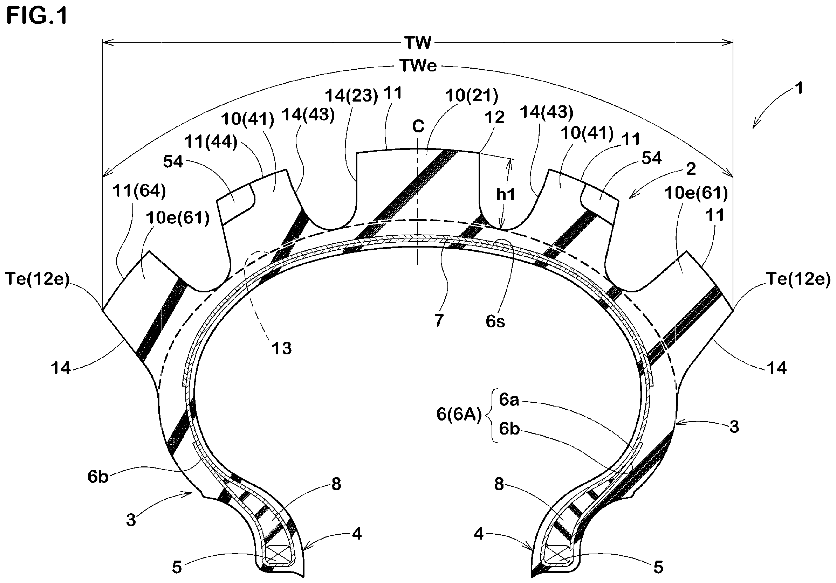

Fig.1 shows a motorcycle tire 1 for running on rough terrain as an embodiment of present invention designed for use in motocross races.

In Fig.1, shown is a state of the tire 1 mounted on a standard wheel rim (not shown) and inflated to a standard inner pressure, and no tire loads are applied.

The tire 1 comprises a tread portion 2, a pair of sidewall portions 3, a pair of bead portions 4 each with a bead core 5 therein, a carcass 6 extended between the bead portions 4 through the tread portion 2 and the sidewall portions 3, and a tread reinforcing cord layer 7 disposed radially outside the carcass 6 in the tread portion 2.

As a characteristic of a motorcycle tire, the tread portion 2 is convexly curved so that the tread face between the tread edges Te is curved like an arc swelling radially outwardly, and the maximum cross sectional width of the tire 1 occurs between the tread edges Te, namely, equals to the axial tread width TW.

incidentally, the tread edges Te correspond to the axially-outermost circumferentially-extending edges 12e of the top faces 11 of the blocks 10.

The carcass 6 is composed of at least one, in this embodiment only one ply 6A of cords extending between the bead portions 4 through the tread portion 2 and sidewall portions 3, and turned up around the bead core 5 in each bead portion 4 from the inside to the outside of the tire so as to form a pair of turned up portions 6b and a toroidal main portion 6a therebetween.

The bead portions 4 are each provided between the main portion 6a and turned up portion 6b of the carcass ply 6A with a bead apex 8 made of a hard rubber extending radially outwardly from the bead core 5 in a tapered manner in order to reinforce the bead portion 4.

The tread portion 2 is provided with a number of blocks 10 each having a radially outermost top face 11 and a sidewall face 14 extending radially inwardly from the edge 12 of the top face 11 toward the bottom 13 of the tread portion 2.

The bottom 13 of the tread portion 2 is a surface almost or substantially parallel with the radial outer surface 6s of the carcass 6.

For example, the height h1 of each block 10 defined as the radial distance between the top face 11 of the block 10 and the bottom 13 of the tread portion 2 is preferably set in a range of from 7 to 19 mm.

The land/sea ratio or the ratio S1/S2 of the total area S1 of the top faces 11 of all of the blocks 10 to the area S2 of the bottom 13 of the tread portion 2 is preferably set in a range of not less than 10 %, more preferably not less than 15 %, but not more than 30 %, more preferably not more than 25 %. If the land/sea ratio is small, there is a possibility that the handling and stability on hard road surfaces is deteriorated. If the land/sea ratio is large, there is a possibility that the cornering performance on the soft road surfaces is deteriorated.

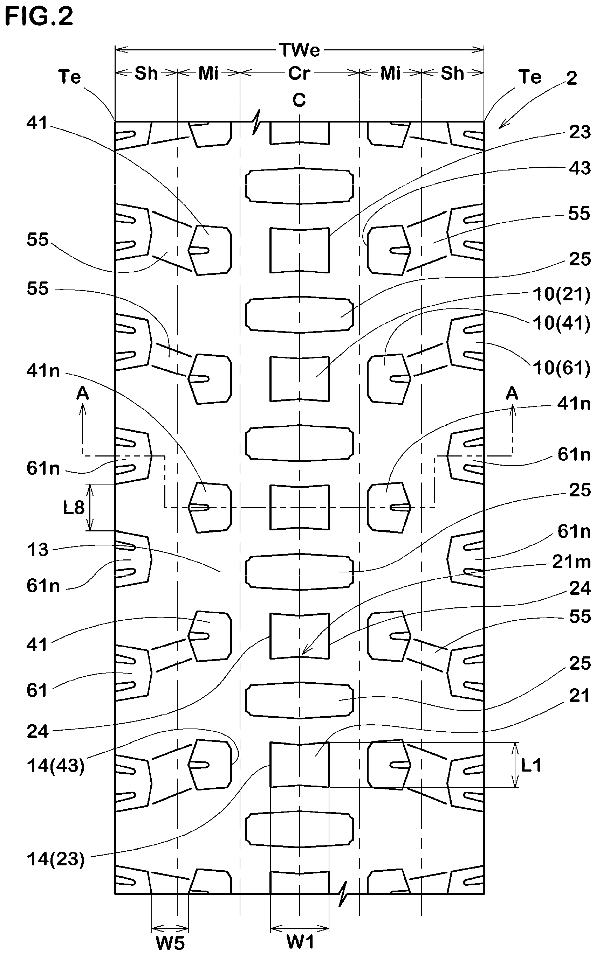

As shown in Fig.2, the blocks 10 include crown blocks 21, middle blocks 41 and shoulder blocks 61.

The crown block 21 is defined such that the centroid of the top face 11 is disposed in a tread crown region Cr defined as being centered on the tire equator C and having a developed width equal to 1/3 of the developed tread width TWe.

The shoulder block 61 is defined such that the centroid of the top face 11 is disposed in one of two tread shoulder regions Sh each defined as having a developed width equal to 1/6 of the developed tread width Twe and extending from one of the tread edges Te toward the tire equator C.

The middle block 41 is defined such that the centroid of the top face 11 is disposed in one of two tread middle regions Mi defined between the tread crown region Cr and the tread shoulder regions Sh.

The crown blocks 21 are circumferentially arranged at intervals.

In this embodiment, in order that the crown blocks 21 are evenly loaded during straight running to thereby bring out good traction performance and improve durability of the blocks, all of the crown blocks 21 have the same shapes. All of the crown blocks 21 are arranged circumferentially at regular intervals and centered on the tire equator C. All of the crown blocks 21 are disposed within the tread crown region Cr.

Preferably, the total number Nc of the crown blocks 21 is set in a range of from 20 to 40.

For example, the axial width W1 of the crown block 21 is set in a range of 15 % to 20 % of the developed tread width TWe.

The crown block 21 has an axially-long rectangular shape having a circumferential length L1 and an axial width W1 more than L1 in order to improve the traction performance and brake performance on hard road surfaces.
The ratio W1/L1 of the axial width W1 to the circumferential length L1 of the crown block 21 is preferably set in a range of not less than 1.2, more preferably not less than 1.3, but not more than 1.5, more preferably not more than 1.4.
If the ratio W1/L1 is less than 1.2, there is a possibility that the traction performance and brake performance on hard road surfaces are deteriorated. If the ratio W1/L1 is more than 1.5, there is a possibility that the handling and stability on soft road surfaces is deteriorated.

It is preferable that the circumferential length L1 of the crown block 21 is gradually decreased from each axial end 24 toward the axial center 21m in order that, during straight running on soft road surfaces, dirt and mud are packed and the traction performance is improved.
In this embodiment, all of the middle blocks 41 are disposed within the tread middle regions Mi and are arranged circumferentially at regular intervals.
Preferably, the number Nm of the middle blocks 41 in each of the tread middle regions Mi is set in a range of from 20 to 40. In this embodiment, this number Nm is equal to the number Nc of the crown block 21.

As shown in Fig.2, the crown blocks 21 and middle blocks 41 are arranged such that the sidewall face 43 of each of the middle blocks 41 faces in the tire axial direction with the sidewall face 23 of one of the crown blocks 21 at least partially, in other words, each of the middle blocks 41 is at least partially overlapped in the tire circumferential direction with one of the crown blocks 21.
It is desirable that 50 % or more, preferably 80 % or more of the circumferential length of the sidewall face 43 of the middle block 41 overlaps with the sidewall face 23 of the crown block 21.

In this embodiment, the axially outside part of the sidewall face of the crown block 21 faces with substantially 100 % of the circumferential length of the sidewall face 43 of the middle block 41. In a word, one crown block 21 and two middle blocks 41 on both sides thereof are substantially axially aligned, and wide block regions extending axially from one of the tread middle regions to the other across the tread crown region is formed. As a result, during running on soft road surfaces, soil and mud adhered to the tread portion becomes lessened and running performance on soft road surfaces can be improved.

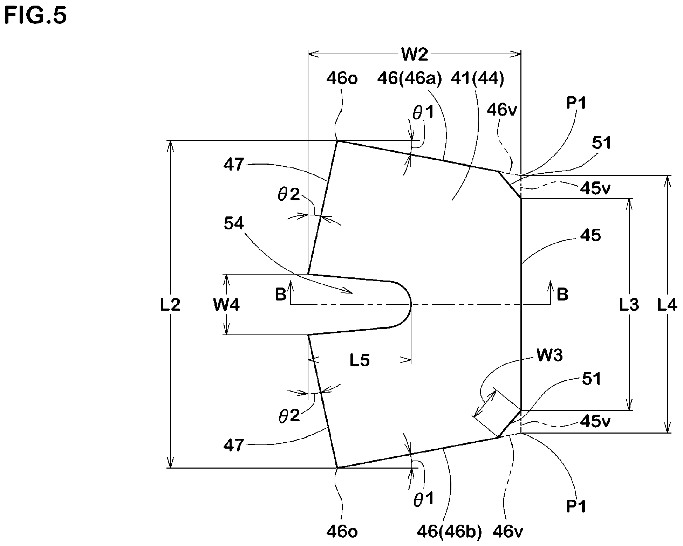

As shown in Fig.5, the top face 44 of the middle block 41 has a substantially pentagonal shape having an axially inner side 45 extending in the tire circumferential direction,
a pair of transverse sides 46 extending axially outwardly from the axially inner side 45 and inclined so that the circumferential length L2 of the top face 44 of the middle block 41 is gradually increased, and
a pair of axially outer sides 47 extending axially outwardly from the axially outer ends 46o of the two transverse sides 46 and inclined so that the circumferential length L2 of the top face 44 of the middle block 41 is gradually decreased.
Such middle block 41 is increased in the rigidity in its axially outer part and thereby the cornering performance on soft road surfaces and hard road surfaces can be improved.
As the circumferential length of the middle block 41 is gradually decreased from the outer ends 46o of the transverse side 46 toward the axially outside, an abrupt change in the rigidity of the axially outer part of the block can be prevented. Therefore, sudden skid of the tire during cornering on hard road surfaces can be prevented, and further chipping off of the middle block 41 can be prevented.

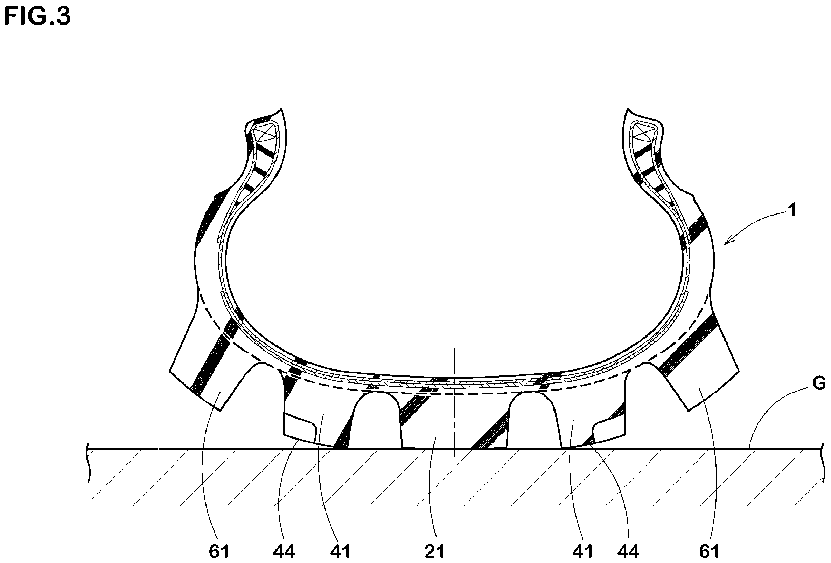

As shown in Fig.3, in the ground contacting patch of the tire 1 in its normally inflated loaded condition and at the camber angle of zero, only an axially inner part of the top face 44 of each of the middle blocks 41 contacts with the ground in order to improve the handling and stability on soft road surfaces in initial stage of cornering when the leaning of the motorcycle is initiated from the straight running state, and also to prevent chipping off of the crown blocks 21 during running straight on hard road surfaces.

If the top face 44 of the middle block 41 is small, there is a possibility that chipping off of the blocks occurs during running on hard road surfaces. If the top face 44 of the middle block 41 is large, there is a possibility that the cornering performance on soft road surfaces is deteriorated. Therefore, as shown in Fig.5, the axial width w2 of the top face 44 of the middle block 41 is preferably set in a range of not less than 0.6 times, more preferably not less than 0.7 times, but not more than 0.9 times, more preferably not more than 0.8 times the axial width W1 of the top face 22 of the crown block 21.
The circumferential length L2 of the top face 44 of the middle block 41 is preferably set in a range of not less than 1.05 times, more preferably not less than 1.08 times, but not more than 1.15 times, more preferably not more than 1.12 times the circumferential length L1 of the top face 22 of the crown block 21.

It is preferable that the axially inner side 45 of the middle block 41 extends straight and parallel with the tire circumferential direction.
The circumferential length L3 of the axially inner side is preferably set in a range of not less than 65 %, more preferably not less than 70 %, but not more than 85 %, more preferably not more than 80 % of the circumferential length L1 of the top face 22 of the crown block 21 in order that the axially inner side 45 exerts its edge effect in initial stage of cornering and the cornering performance on soft road surfaces can be improved.

It is preferable that the above-mentioned two transverse sides 46 of the middle block 41 extend straight, while increasing to the opposite directions at identical values of angle θ1 with respect to the tire axial direction in order that the block rigidity becomes even between one transverse side 46a and the other transverse side 46b, and the block can be prevented from chipping off.

The angle θ1 of the transverse side 46 is preferably set in a range of not less than 1 degrees, more preferably not less than 3 degrees, but not more than 10 degrees, more preferably not more than 5 degrees with respect to the tire axial direction in order that the transverse side 46 exerts its edge effect in the tire circumferential direction and axial direction in a well balanced manner.

It is preferable that the above-mentioned two axially outer sides 47 of the middle block 41 extend axially outwardly from the axially outer ends 46o of the transverse sides 46, while increasing to the opposite directions at identical values of angle θ2 with respect to the tire circumferential direction in order that the entire lengths of the two axially outer sides 47 exert edge effect and cornering performance of the tire can be improved.
The angle θ2 of the axially outer side 47 is preferably set in a range of not less than 16 degrees, more preferably not less than 18 degrees, but not more than 24 degrees, more preferably not more than 22 degrees with respect to the tire circumferential direction in order that a sudden deformation of the middle block 41 during cornering is prevented and thereby controllability during cornering can be improved.

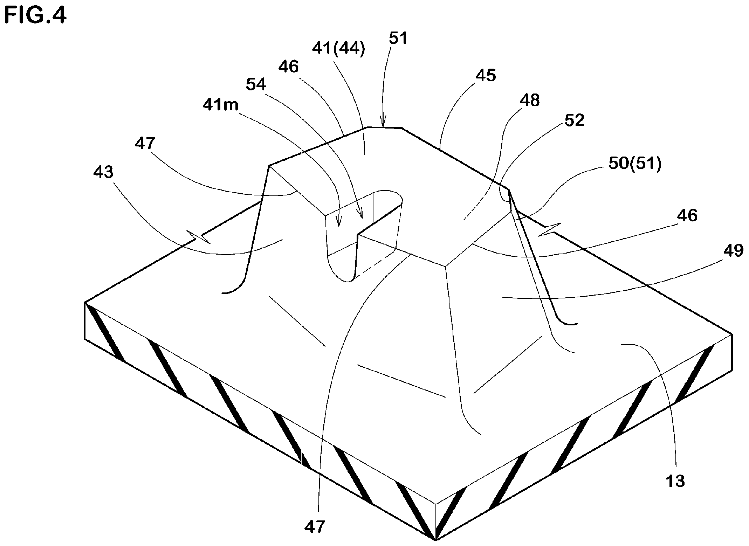

It is preferable that, as shown in Fig.4, the middle block 41 is provided with a chamfer portion 51 at a corner 50 between
an inside sidewall face 48 extending radially inwardly from the axially inner side 45 and
a transverse sidewall face 49 extending radially inwardly from each of the transverse sides 46.
The chamfer portion 51 in this embodiment has
a straight edge 52 at the top face 44 of the middle block 41 and a flat sidewall face extending radially inwardly from the straight edge 52 and continuing to the bottom 13 of the tread portion through a curved part (rounded corner) in order that the chamfer portion 51 prevents the block from chipping off and exerts edge effect in multi directions and the handling and stability on soft road surfaces can be improved.

If the width w3 of the chamfer portion 51 is small, there is a possibility that chipping off of the block can not be prevented. If the width w3 of the chamfer portion 51 is large, there is a possibility that the ground contacting area of the tire becomes small, and the traction (hard) is deteriorated. Therefore, as shown in Fig.5, the width w3 of the chamfer portion 51 is preferably set in a range of not less than 0.10 times, more preferably not less than 0.15 times, but not more than 0.30 times, more preferably not more than 0.25 times a nominal length L4 of the axially inner side which is the circumferential length between two intersecting points P1 of an imaginary extended line 45v of the axially inner side 45 with two imaginary extended lines 46v of the two transverse sides 46.

The shape or configuration of the chamfer portion 51 is not limited to the above described example. For example, the chamfer portion may be configured such that the edge in the top face is an arc, and the sidewall face extending radially inwardly from the arched edge is curved accordingly.

As shown in Fig.4, it is preferable that the middle block 41 is provided with one or two grooves 54 extending from the axially outer side 47 toward the tire equator C and terminating within the middle block 41.
In this embodiment, each of the middle blocks 41 is provided with a single groove 54 at a substantially intermediate position 41m of the block in the tire circumferential direction.
Such groove 54 increases the edges of the middle block 41 and reduces the rigidity of the middle block 41 in its axially outer portion, therefore, cornering performance on soft road surfaces can be improved, and controllability during cornering on hard road surfaces can be improved.

It is preferable that, as shown in Fig.5, the circumferential width w4 of the groove 54 is gradually decreased toward the tire equator C.
Further, the circumferential width w4 of the groove 54 is preferably set in a range of not less than 0.1 times, more preferably not less than 0.13 times, but not more than 0.2 times, more preferably not more than 0.17 times the circumferential length L2 of the middle block 41 in order to enhance the above described effect.

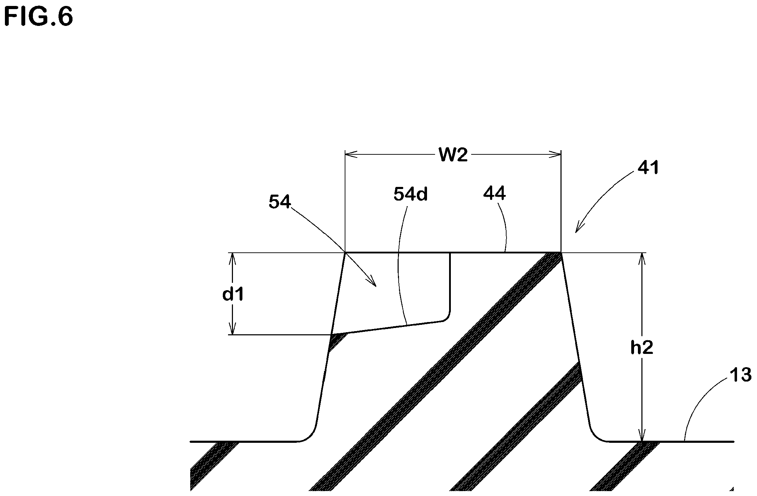

It is preferable that the axial length L5 of the groove 54 is set in a range of not less than 0.35 times, more preferably not less than 0.40 times, but not more than 0.55 times, more preferably not more than 0.50 times the axial width w2 of the middle block 41.
As shown in Fig.6, the depth d1 of the groove 54 is preferably set in a range of not less than 0.05 times, more preferably not less than 0.10 times, but not more than 0.25 times, more preferably not more than 0.20 times the block height h2 of the middle block 41.
Such groove 54 optimizes the rigidity of the middle block 41 and improves cornering performance on soft road surfaces.

It is preferable that the groove bottom 54d of the groove 54 is inclined so that the groove depth d1 gradually increases toward the axially outside of the tire.
Such groove 54 reduces the rigidity of the middle block 41 gradually toward the axially outside, and controllability during cornering can be improved.

As shown in Fig.2, the shoulder blocks 61 are disposed within the tread shoulder regions Sh and arranged circumferentially at intervals in each shoulder region Sh.
It is preferable that the number Ns of the shoulder blocks 61 in each shoulder region Sh is more than the number Nc of the crown blocks 21 and more than the number Nm of the middle blocks 41 in each tread middle region Mi.
The shoulder region sh provided with such shoulder blocks 61 is increased in the land/sea ratio in comparison with the tread crown region Cr and the tread middle region Mi, and effectively improves cornering performance on soft road surfaces and hard road surfaces when the motorcycle is leaned largely.
If the number Ns of the shoulder block is small, there is a possibility that the handling and stability on hard road surfaces is deteriorated. If the number Ns of the shoulder block is large, there is a possibility that the cornering performance on the soft road surfaces is deteriorated. Therefore, the number Ns of the shoulder blocks is preferably set in a range of not less than 1.10 times, more preferably not less than 1.13 times, but not more than 1.20 times, more preferably not more than 1.17 times the number Nm of the middle blocks 41.

It is preferable that axial distances W5 between the shoulder blocks 61 and the middle blocks 41 are substantially constant in the tire circumferential direction, and
the axial distances W5 are set in a range of 8 % to 12 % of the developed tread width TWe in order to improve the handling and stability of the motorcycle when initiating the leaning of the motorcycle to turn, and cornering performance when the motorcycle is largely leaned.

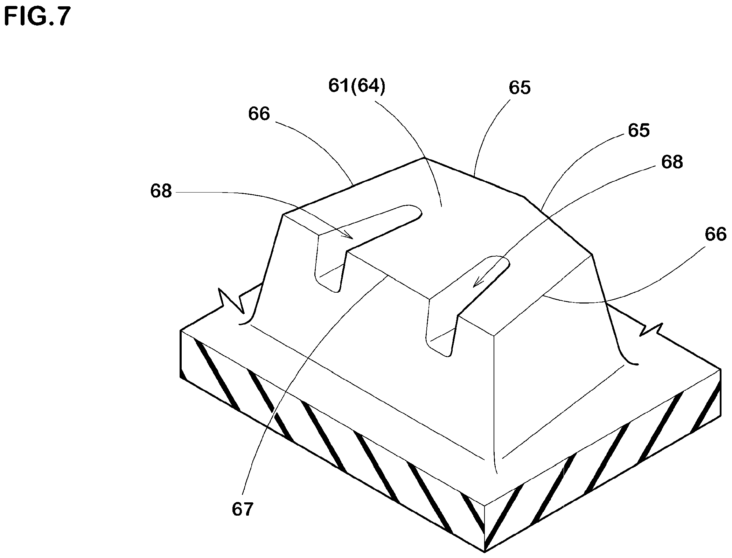

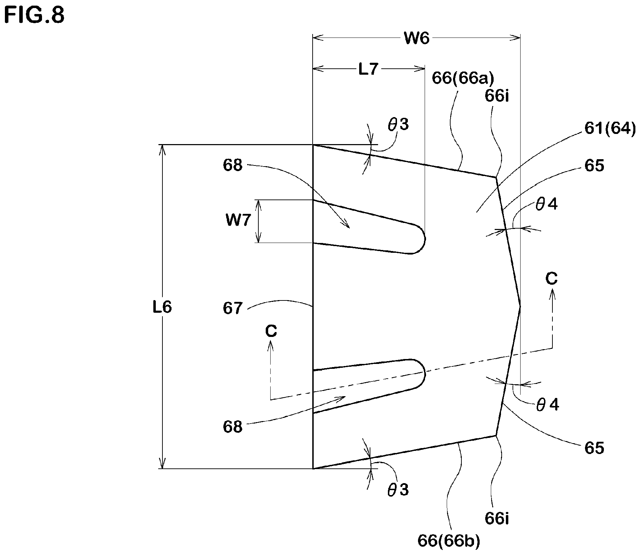

If the top face 64 of the shoulder block 61 is small, there is a possibility that chipping off of the block occurs on hard road surfaces. If the top face 64 of the shoulder block 61 is large, there is a possibility that the cornering performance on the soft road surfaces is deteriorated.
Therefore, as shown in Fig.7 and Fig.8, the axial width w6 of the top face 64 of the shoulder block 61 is preferably set in a range of not less than 0.55 times, more preferably not less than 0.6 times, but not more than 0.7 times, more preferably not more than 0.65 times the axial width W1 of the top face 22 of the crown block 21.

It is preferable that the maximum circumferential length L6 of the top face 64 of the shoulder block 61 is more than the maximum circumferential length of the top face of the crown block.
The maximum circumferential length L6 of the top face 64 of the shoulder block 61 is preferably set in a range of not less than 1.05 times, more preferably not less than 1.16 times, but not more than 1.25 times, more preferably not more than 1.20 times the circumferential length L1 of the crown block 21.

In this embodiment, as shown in Fig.8, the top face 64 of the shoulder block 61 has a substantially pentagonal shape having
an axially outer side 67 extending in the tire circumferential direction,
a pair of transverse sides 66 extending axially inwardly from the axially outer side 67 and inclines such that the circumferential length of the top face 64 of the shoulder block 61 is gradually decreased, and
a pair of axially inner sides 65 extending from the respective axial inner ends 66i of the two transverse sides 66 while inclining steeply than the transverse sides 66 with respect to the tire axial direction such that the circumferential length of the middle block 41 is gradually decreased.

It is preferable that the axially outer side 67 of the shoulder block 61 extend straight and parallel with the tire circumferential direction in order to improve cornering performance on soft road surfaces when the motorcycle is leaned largely.

It is preferable that the two transverse sides 66 of the shoulder block 61 extend straight while inclining to the opposite directions with respect to the tire axial direction at identical values of angles θ3 in order that the block rigidity becomes even between one transverse side 66a and the other transverse side 66b, and the block can be prevented from chipping off.
The angle θ3 of the transverse side 66 with respect to the tire axial direction is preferably set in a range of not less than 4 degrees, more preferably not less than 6 degrees, but not more than 12 degrees, more preferably not more than 10 degrees. Such transverse side 66 exerts its edge effect in the tire circumferential direction and tire axial direction in a well balanced manner.

It is preferable that the two inner sides 65 of the shoulder block 61 extend axially inwardly from the axial inner ends 66i of the transverse sides 66 while inclining to the opposite directions at identical values of angles θ4 with respect to the tire circumferential direction in order that the entire lengths of the two axially inner sides 65 exert edge effect and cornering performance of the tire can be improved. The angle θ4 of the inner side 65 with respect to the tire circumferential direction is preferably set in a range of not less than 8 degrees, more preferably not less than 10 degrees, but not more than 16 degrees, more preferably not more than 14 degrees in order that a sudden deformation of the shoulder block 61 during cornering is prevented and thereby controllability during cornering can be improved.

It is preferable that, as shown in Fig.7, the shoulder block 61 is provided with one or two grooves 68 extending toward the tire equator C from the axially outer side 67 and terminating within the shoulder block 61. In this embodiment, two grooves 68 are provided.
Such groove 68 increases the edges of the shoulder block 61 and reduces the rigidity of the shoulder block 61 in its axially outer part, therefore, cornering performance on soft road surfaces is improved, and controllability during cornering on hard road surfaces can be improved.

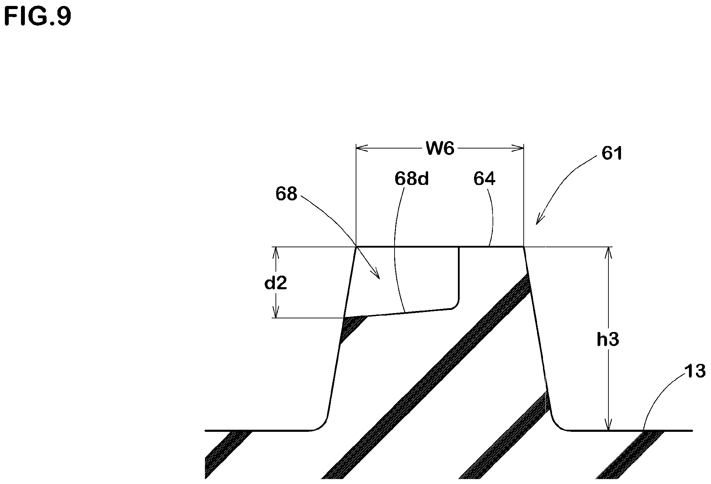

It is preferable that as shown in Fig.8, the circumferential width w7 of the groove 68 is gradually decreased toward the axially inside of the tire.
Preferably, the circumferential width w7 of the groove 68 is set in a range of not less than 0.07 times, more preferably not less than 0.1 times, but not more than 0.2 times, more preferably not more than 0.17 times the circumferential length L6 of the shoulder block 61 in order to effectively bring out the above described effect.
The axial length L7 of the groove 68 is preferably set in a range of not less than 0.4 times, more preferably not less than 0.5 times, but not more than 0.7 times, more preferably not more than 0.6 times the axial width w6 of the shoulder block 61.
As shown in Fig.9, the depth d2 of the groove 68 is preferably set in a range of not less than 0.05 times, more preferably not less than 0.1 times, but not more than 0.25 times, more preferably not more than 0.2 times the block height h3 of the shoulder block 61.
Such groove 68 optimizes the rigidity of the shoulder block 61 and improves cornering performance on soft road surfaces.

It is preferable that the bottom 68d of the groove 68 is inclined so that the depth d2 is gradually increased toward the axially outside of the tire.
Such groove 68 reduces the rigidity of the shoulder block 61 gradually toward the axially outside and improves controllability when the motorcycle is leaned largely.

It is preferable that, as shown in Fig.2, the bottom 13 of the tread portion 2 is provided between the circumferentially arranged crown blocks 21with concave portions 25 in order to enable the tread crown region Cr to be deformed easily even under light tire loads so as to increase the ground contacting area and improve the traction performance.

It is preferable that the bottom 13 of the tread portion 2 is provided with tie bars 55 protruding from the bottom 13 and connecting the sidewall faces of the middle blocks 41 with the sidewall faces of the shoulder blocks 61.
Such tie bars 55 control the axial deformation of the middle blocks 41 and the shoulder blocks 61, and improve cornering performance on hard road surfaces.
In this embodiment, plural pairs of shoulder blocks 61n, the circumferential distance L8 or circumferential pitch length between which is minimum are not connected with the adjacent middle blocks 41n through the tie bars 55 in order to prevent the rigidity of the shoulder blocks 61n from becoming excessively high and improve controllability during cornering.

### Comparison Tests

Motorcycle tires for running on rough terrain having the internal structure shown in Fig.1 and specifications shown in Table 1 were prepared and tested.

Embodiment tires Ex.1-Ex23 had tread patterns based on that shown in Fig.2.

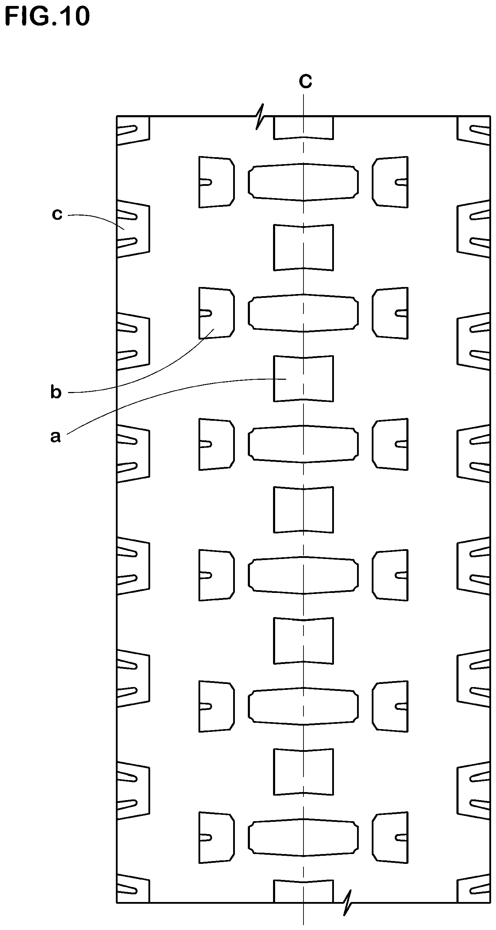

Comparative example tire Ref.1 had a tread pattern shown in Fig.10 comprising crown blocks (a) and middle blocks (b) arranged alternately in the tire circumferential direction without overlap.

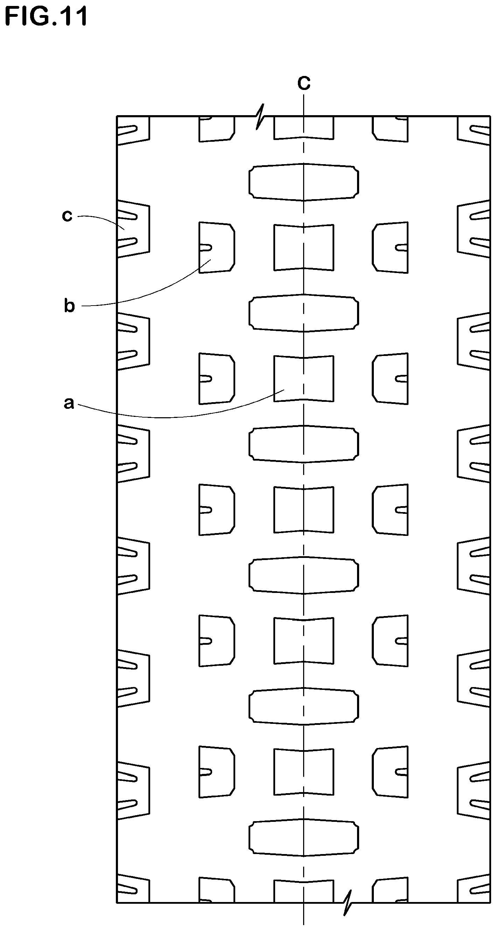

Comparative example tires Ref.2 and Ref.3 each had a tread pattern shown in Fig.11 comprising crown blocks (a) and middle blocks (b) aligned axially to overlap completely.

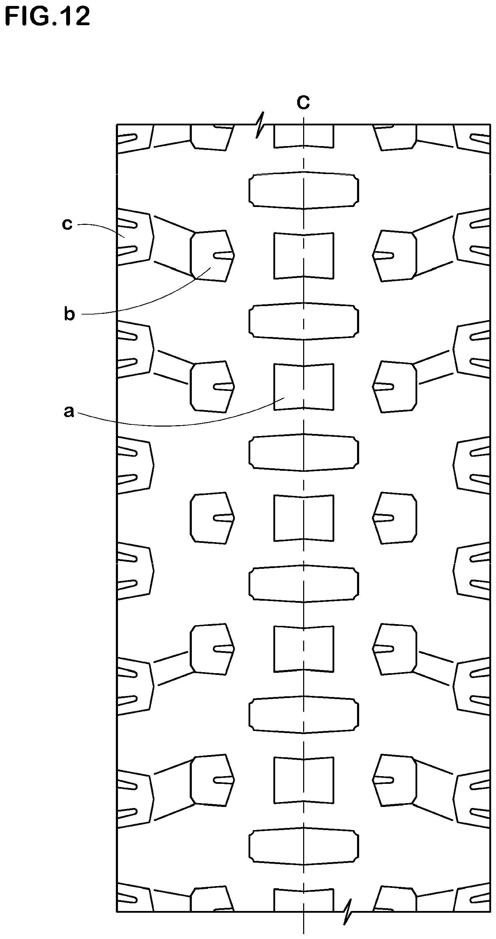

Comparative example tires Ref.4-Ref.6 each had a tread pattern shown in Fig.12 which is similar to Fig.2 but different in the middle blocks (b) oppositely oriented.

The tire size for front wheel was 80/100-21 (rim size: 21X1.60). The tire size for rear wheel was 120/80-19 (rim size: 19X2.15).

Comparison tests were conducted as follows.
Using a 450 cc motocross motorcycle (tire pressure: front=80 kPa, rear=80 kPa), the traction performance and cornering performance of the test tires when running on hard road surfaces and soft road surfaces were evaluated by the test rider. The results are indicated in Table 1 by an index based on Ref.1 being 100, wherein the larger is better.
Further, after running for three hours, in order to evaluate the durability of the tread portion, the tread portion was checked for damaged portions. The results are indicated in Table 1 by an index based on Ref.1 being 100, wherein the larger the index number, the better the durability.

From the test results, it was confirmed that the motorcycle tires according to the present invention can bring out excellent running performance on both of soft road surfaces and hard road surfaces.

**Table 1 (1/2)**

| Tire | Ref.1 | Ref.2 | Ref.3 | Ref.4 | Ref.5 | Ref.6 | Ex.1 | Ex.2 | Ex.3 | Ex.4 | Ex.5 | Ex.6 | Ex.7 | Ex.8 | Ex.9 |
|---|---|---|---|---|---|---|---|---|---|---|---|---|---|---|---|
| tread pattern (Fig.No.) | 10 | 11 | 11 | 12 | 12 | 12 | 2 | 2 | 2 | 2 | 2 | 2 | 2 | 2 | 2 |
| contact or not *1 | NCWG | NCWG | CWG | CWG | CWG | CWG | CWG | CWG | CWG | CWG | CWG | CWG | CWG | CWG | CWG |
| width W3/nominal length L4 | 0.0 | 0.0 | 0.0 | 0.0 | 0.2 | 0.0 | 0.2 | 0.0 | 0.05 | 0.1 | 0.3 | 0.4 | 0.2 | 0.2 | 0.2 |
| length L3/nominal length L4 | 1.0 | 1.0 | 1.0 | 1.0 | 0.65 | 1.0 | 0.65 | 1.0 | 0.65 | 0.65 | 0.65 | 0.65 | 0.50 | 0.90 | 0.65 |
| number of groove 54 of middle block | 0 | 0 | 0 | 0 | 0 | 1 | 1 | 0 | 1 | 1 | 1 | 1 | 1 | 1 | 1 |
| width W4/length L2 | 0 | 0 | 0 | 0 | 0 | 0.15 | 0.15 | - | 0.15 | 0.15 | 0.15 | 0.15 | 0.15 | 0.15 | 0.05 |
| number of groove 68 of shoulder block | 0 | 0 | 0 | 0 | 0 | 2 | 2 | 0 | 2 | 2 | 2 | 2 | 2 | 2 | 2 |
| width W7/length L6 | 0 | 0 | 0 | 0 | 0 | 0.15 | 0.15 | - | 0.15 | 0.15 | 0.15 | 0.15 | 0.15 | 0.15 | 0.05 |
| traction (soft) | 100 | 100 | 120 | 120 | 115 | 120 | 115 | 110 | 120 | 118 | 90 | 80 | 115 | 113 | 115 |
| traction (hard) | 100 | 105 | 105 | 90 | 90 | 90 | 105 | 105 | 108 | 100 | 98 | 95 | 100 | 105 | 100 |
| cornering (soft) | 100 | 90 | 90 | 95 | 95 | 100 | 120 | 100 | 125 | 122 | 118 | 115 | 110 | 115 | 105 |
| cornering (hard) | 100 | 100 | 100 | 100 | 105 | 115 | 110 | 105 | 110 | 110 | 105 | 100 | 105 | 108 | 105 |
| durability | 100 | 100 | 100 | 105 | 110 | 95 | 115 | 90 | 100 | 105 | 125 | 130 | 95 | 115 | 110 |

| | | | | | | | | | | | | | | | |
|---|---|---|---|---|---|---|---|---|---|---|---|---|---|---|---|
| *1) whether or not the middle blocks contact with the ground under the normally inflated loaded condition and at the camber angle of zero. CWG: contact with the ground NCWG: not contact with the ground | | | | | | | | | | | | | | | |

**Table 1 (2/2)**

| Tire | Ex.10 | Ex.11 | Ex.12 | Ex.13 | Ex.14 | Ex.15 | Ex.16 | Ex.17 | Ex.18 | Ex.19 | Ex.20 | Ex.21 | Ex.22 | Ex.23 |
|---|---|---|---|---|---|---|---|---|---|---|---|---|---|---|
| tread pattern (Fig. No.) | 2 | 2 | 2 | 2 | 2 | 2 | 2 | 2 | 2 | 2 | 2 | 2 | 2 | 2 |
| contact or not *1 | CWG | CWG | CWG | CWG | CWG | CWG | CWG | CWG | CWG | CWG | CWG | CWG | CWG | CWG |
| width W3/nominal length L4 | 0.2 | 0.2 | 0.2 | 0.2 | 0.2 | 0.2 | 0.2 | 0.2 | 0.2 | 0.2 | 0.2 | 0.2 | 0.2 | 0.2 |
| length L3/nominal length L4 | 0.65 | 0.65 | 0.65 | 0.65 | 0.65 | 0.65 | 0.65 | 0.65 | 0.65 | 0.65 | 0.65 | 0.65 | 0.65 | 0.65 |
| number of groove 54 of middle block | 1 | 1 | 1 | 1 | 0 | 0 | 0 | 1 | 1 | 1 | 2 | 2 | 2 | 2 |
| width W4/length L2 | 0.05 | 0.15 | 0.15 | 0.30 | 0 | 0 | 0 | 0.15 | 0.15 | 0.15 | 0.15 | 0.15 | 0.15 | 0.15 |
| number of groove 68 of shoulder block | 2 | 2 | 2 | 2 | 1 | 2 | 3 | 0 | 1 | 3 | 0 | 1 | 2 | 3 |
| width W7/length L6 | 0.15 | 0.05 | 0.3 | 0.3 | 0.15 | 0.15 | 0.15 | 0 | 0.15 | 0.15 | 0 | 0.15 | 0.15 | 0.15 |
| traction (soft) | 115 | 115 | 115 | 115 | 115 | 115 | 115 | 115 | 115 | 115 | 115 | 115 | 115 | 115 |
| traction (hard) | 100 | 105 | 105 | 100 | 105 | 105 | 105 | 105 | 105 | 105 | 105 | 105 | 105 | 105 |
| cornering (soft) | 108 | 105 | 110 | 115 | 102 | 105 | 108 | 103 | 105 | 115 | 105 | 110 | 115 | 120 |
| cornering (hard) | 110 | 107 | 100 | 95 | 106 | 108 | 105 | 107 | 110 | 105 | 105 | 100 | 95 | 105 |
| durability | 108 | 105 | 100 | 90 | 119 | 117 | 113 | 118 | 116 | 110 | 110 | 105 | 100 | 95 |

| | | | | | | | | | | | | | | |
|---|---|---|---|---|---|---|---|---|---|---|---|---|---|---|
| *1) whether or not the middle blocks contact with the ground under the normally inflated loaded condition and at the camber angle of zero. CWG: contact with the ground NCWG: not contact with the ground | | | | | | | | | | | | | | |

## Claims

1. A motorcycle tire (1) suitable for running on rough terrain comprising
a tread portion (2) having a developed tread width (TWe) and provided with a plurality of blocks (10) protruding from a bottom (13) of the tread portion (2) to define a block tread pattern, wherein the blocks (10) include crown blocks (21), middle blocks
(41) and shoulder blocks (61),
the crown blocks (21) are disposed in a tread crown region (Cr) centered on the tire equator (C) and having a developed width of 1/3 of the developed tread width (TWe),
the shoulder blocks (61) are disposed in a pair of tread shoulder regions (Sh) extending toward the tire equator (C) from respective tread edges (Te) and each having a developed width of 1/6 of the developed tread width (TWe), and
the middle blocks (41) are disposed in a pair of tread middle regions (Mi) between the tread crown region (Cr) and the shoulder regions (Sh), and
each of the blocks (10) has a top face (11) and a sidewall face (14), the sidewall face (14) extending radially inwardly from the edge (12) of the top face (11) and continued to the bottom (13) of the tread portion (2),
wherein
the crown blocks (21) and the middle blocks (41) are arranged such that at least part of the sidewall face (14) of each of the middle blocks (41) overlaps with the sidewall face (14) of one of the crown blocks (21) in the tire circumferential direction,
the top face (11) of each of the crown blocks (21) has an axially long rectangular shape having an circumferential length (L1) and an axial width (W1) more than the circumferential length (L1),
the top face (11) of each of the middle blocks (41) has a substantially pentagonal shape having
an axially inner side (45) extending in the tire circumferential direction,
a pair of transverse sides (46) extending axially outwardly from the axially inner side (45) and inclined so that the circumferential length of the top face (11) of the middle block (41) is gradually increased, and
a pair of axially outer sides (47) extending axially outwardly from the axially outer ends (460) of the transverse sides (46) and inclined so that the circumferential length (L2) of the top face (11) of the middle block (41) is gradually decreased,
**Characterized in that**
the number Ns of the shoulder blocks (61) in each tread shoulder region (Sh) is more than the number Nc of the crown blocks (21) and more than the number Nm of the middle blocks (41) in each tread middle region (Mi).

2. The motorcycle tire according to claim 1, wherein
the top face (11) of the shoulder block (61) has a substantially pentagonal shape having
an axially outer side (67) extending in the tire circumferential direction,
a pair of transverse sides (66) extending axially inwardly from the axially outer side (67) and inclined so that the circumferential direction length of the top face (11) of the shoulder block (61) is gradually decreased, and
a pair of axially inner sides (65) extending from the axial inner ends (66i) of the two transverse sides (66) and inclined more steeply than the transverse sides (66) with respect to the tire axial direction so that the circumferential length of the shoulder block (61) is gradually decreased.

3. The motorcycle tire according to any one of claims 1-2, wherein
the middle block (41) is provided with a chamfer portion (51) at a corner (50) between a transverse sidewall face (49) of the block (41) extending radially inwardly from each of the transverse sides (46) and an inside sidewall face (48) of the block (41) extending radially inwardly from said axially inner side.

4. The motorcycle tire according to any one of claims 1-3, wherein
the middle block (41) is provided with a groove (54) extending from the axially outer side toward the tire equator (C) and terminating within the middle block (41).

5. The motorcycle tire according to any one of claims 1-4, wherein
the shoulder block (61) is provided with a groove (68) extending from the axially outer side toward the tire equator (C) and terminating within the shoulder block (61).

6. The motorcycle tire according to any one of claims 1-5, wherein
the bottom (13) of the tread portion (2) is provided with tie bars (55) protruding radially outwardly from the bottom (13) of the tread portion (2) and connecting between the sidewall faces of the middle blocks (41) and the sidewall faces of the shoulder blocks (61).

## Patentansprüche

1. Motorradreifen (1), der zur Fahrt auf unebenem Gelände geeignet ist, umfassend
einen Laufflächenabschnitt (2), der eine abgewickelte Laufflächenbreite (TWe) aufweist und mit einer Vielzahl von Blöcken (10) versehen ist, die von einem Grund (13) des Laufflächenabschnitts (2) vorstehen, um ein Blocklaufflächenprofil zu definieren, wobei die Blöcke (10) Kronenblöcke (21), Mittelblöcke (41) und Schulterblöcke (61) umfassen,
wobei die Kronenblöcke (21) in einem Laufflächenkronenbereich (Cr) angeordnet sind, der auf dem Reifenäquator (C) zentriert ist und eine abgewickelte Breite von 1/3 der abgewickelten Laufflächenbreite (TWe) aufweist,
die Schulterblöcke (61) in einem Paar Laufflächenschulterbereichen (Sh) angeordnet sind, die sich von jeweiligen Laufflächenkanten (Te) in Richtung des Reifenäquators (C) erstrecken und jeweils eine abgewickelte Breite von 1/6 der abgewickelten Laufflächenbreite (TWe) aufweisen, und
die Mittelblöcke (41) in einem Paar Laufflächenmittelbereichen (Mi) zwischen dem Laufflächenkronenbereich (Cr) und den Schulterbereichen (Sh) angeordnet sind,
ein jeder der Blöcke (10) eine obere Fläche (11) und eine Seitenwandfläche (14) aufweist, wobei sich die Seitenwandfläche (14) von der Kante (12) der oberen Fläche (11) radial nach innen erstreckt und sich zu dem Grund (13) des Laufflächenabschnitts (2) fortsetzt,
wobei
die Kronenblöcke (21) und die Mittelblöcke (41) so angeordnet sind, dass mindestens ein Teil der Seitenwandfläche (14) eines jeden der Mittelblöcke (41) die Seitenwandfläche (14) von einem der Kronenblöcke (21) in Reifenumfangsrichtung überlappt,
die obere Fläche (11) eines jeden der Kronenblöcke (21) eine axial lange rechteckige Form mit einer Umfangslänge (L1) und einer axialen Breite (W1), die größer als die Umfangslänge (L1) ist, aufweist,
die obere Fläche (11) eines jeden der Mittelblöcke (41) eine im Wesentlichen fünfeckige Form aufweist, mit
einer axial inneren Seite (45), die sich in der Reifenumfangsrichtung erstreckt,
einem Paar Querseiten (46), die sich von der axial inneren Seite (45) axial nach außen erstrecken und so geneigt sind, dass die Umfangslänge der oberen Fläche (11) des Mittelblocks (41) allmählich zunimmt, und einem Paar axial äußeren Seiten (47), die sich von den axial äußeren Enden (460) der Querseiten (46) axial nach außen erstrecken und so geneigt sind, dass die Umfangslänge (L2) der oberen Fläche (11) des mittleren Blocks (41) allmählich abnimmt,
**dadurch gekennzeichnet, dass**
die Anzahl Ns der Schulterblöcke (61) in jedem Laufflächenschulterbereich (Sh) größer ist als die Anzahl Nc der Kronenblöcke (21) und größer ist als die Anzahl Nm der Mittelblöcke (41) in jedem Laufflächenmittelbereich (Mi).

2. Motorradreifen nach Anspruch 1, wobei
die obere Fläche (11) des Schulterblocks (61) eine im Wesentlichen fünfeckige Form aufweist, mit
einer axial äußeren Seite (67), die sich in Reifenumfangsrichtung erstreckt, einem Paar Querseiten (66), die sich von der axial äußeren Seite (67) axial nach innen erstrecken und so geneigt sind, dass die Länge der oberen Seite (11) des Schulterblocks (61) in Umfangsrichtung allmählich abnimmt, und einem Paar axial inneren Seiten (65), die sich von den axialen inneren Enden (66i) der zwei Querseiten (66) erstrecken und steiler als die Querseiten (66) in Bezug auf die Reifenaxialrichtung geneigt sind, so dass die Umfangslänge des Schulterblocks (61) allmählich abnimmt.

3. Motorradreifen nach einem der Ansprüche 1 bis 2, wobei der Mittelblock (41) an einer Ecke (50) zwischen einer Querseitenwandfläche (49) des Blocks (41), die sich von einer jeden der Querseiten (46) radial nach innen erstreckt, und einer innenseitigen Seitenwandfläche (48) des Blocks (41), die sich von der axial inneren Seite radial nach innen erstreckt, mit einem Fasenabschnitt (51) versehen ist.

4. Motorradreifen nach einem der Ansprüche 1 bis 3, wobei der Mittelblock (41) mit einer Rille (54) versehen ist, die sich von der axial äußeren Seite in Richtung des Reifenäquators (C) erstreckt und innerhalb des Mittelblocks (41) endet.

5. Motorradreifen nach einem der Ansprüche 1 bis 4, wobei der Schulterblock (61) mit einer Rille (68) versehen ist, die sich von der axial äußeren Seite in Richtung des Reifenäquators (C) erstreckt und innerhalb des Schulterblocks (61) endet.

6. Motorradreifen nach einem der Ansprüche 1 bis 5, wobei der Boden (13) des Laufflächenabschnitts (2) mit Anbindungsstegen (55) versehen ist, die vom Grund (13) des Laufflächenabschnitts (2) radial nach außen vorstehen und eine Verbindung zwischen den Seitenwandflächen der Mittelblöcke (41) und den Seitenwandflächen der Schulterblöcke (61) herstellen.

## Revendications

1. Pneumatique pour motocyclette (1) approprié pour circuler sur des terrains accidentés, comprenant :
une portion formant bande de roulement (2) ayant une largeur de roulement développé (TWe) et dotée d'une pluralité de blocs (10) qui se projettent depuis un fond (13) de la portion formant bande de roulement (2) pour définir un motif de blocs sur la bande de roulement, dans lequel les blocs (10) incluent des blocs de couronne (21), des blocs médians (41), et des blocs d'épaulement (61),
les blocs de couronne (21) sont disposés dans une région de couronne (Cr) de la bande de roulement, centrée sur l'équateur de pneumatique (C) et ayant une largeur développée de 1/3 de la largeur de roulement développée (TWe),
les blocs d'épaulement (61) sont disposés dans une paire de régions d'épaulement (Sh) de la bande de roulement s'étendant vers l'équateur de pneumatique (C) depuis des bordures de roulement respectives (Te) et ayant chacune une largeur développée de 1/6 de la largeur de roulement développée (TWe), et
les blocs médians (41) sont disposés dans une paire de régions médianes (Mi) de la bande de roulement entre la région de couronne (Cr) de la bande de roulement et les régions d'épaulement (Sh), et
chacun des blocs (10) a une face supérieure (11) et une face de paroi latérale (14), la face de paroi latérale (14) s'étendant radialement vers l'intérieur depuis la bordure (12) de la face supérieure (11) et se poursuit jusqu'au fond (13) de la portion formant bande de roulement (2),
dans lequel
les blocs de couronne (21) et les blocs médians (41) sont agencés de telle façon qu'au moins une partie de la face de paroi latérale (14) de chacun des blocs médians (41) est en chevauchement avec la face de paroi latérale (14) de l'un des blocs de couronne (21) dans la direction circonférentielle du pneumatique,
la face supérieure (11) de chacun des blocs de couronne (21) a une forme rectangulaire axialement allongée ayant une longueur circonférentielle (L1) et une largeur axiale (W1) supérieure à la longueur circonférentielle (L1),
la face supérieure (11) de chacun des blocs médians (41) à sensiblement la forme d'un pentagone ayant
un côté axialement intérieur (45) s'étendant dans la direction circonférentielle du pneumatique,
une paire de côtés transversaux (46) s'étendant axialement vers l'extérieur depuis le côté axialement intérieur (45) et inclinés de telle façon que la longueur circonférentielle de la face supérieure (11) du bloc médian (41) augmente graduellement, et
une paire de côtés axialement extérieurs (47) s'étendant axialement vers l'extérieur depuis les extrémités axialement extérieures (460) des côtés transversaux (46) et inclinés de telle façon que la longueur circonférentielle (L2) de la face supérieure (11) du bloc médian (41) diminue graduellement,
**caractérisé en ce que**
le nombre Ns des blocs d'épaulement (61) dans chaque région d'épaulement (Sh) de la bande de roulement est supérieur au nombre Nc des blocs de couronne (21) et supérieur au nombre Nm des blocs médians (41) dans chaque région médiane (Mi) de la bande de roulement.

2. Pneumatique pour motocyclette selon la revendication 1, dans lequel
la face supérieure (11) du bloc d'épaulement (61) a sensiblement la forme d'un pentagone ayant
un côté axialement extérieur (67) s'étendant dans la direction circonférentielle du pneumatique,
une paire de côtés transversaux (66) s'étendant axialement vers l'intérieur depuis le côté axialement extérieur (67) et inclinés de telle façon que la longueur en direction circonférentielle de la face supérieure (11) du bloc d'épaulement (61) diminue graduellement, et
une paire de côtés axialement intérieurs (65) s'étendant depuis les extrémités axialement intérieures (66i) des deux côtés transversaux (66) et inclinés plus fortement que les côtés transversaux (66) par rapport à la direction axiale du pneumatique de telle façon que la longueur circonférentielle du bloc d'épaulement (61) diminue graduellement.

3. Pneumatique pour motocyclette selon l'une quelconque des revendications 1 et 2, dans lequel
le bloc médian (41) est pourvu d'une portion en chanfrein (51) au niveau d'un coin (50) entre une face de paroi latérale transversale (49) du bloc (41) s'étendant radialement vers l'intérieur depuis chacun des côtés transversaux (46) et une face de paroi latérale intérieure (48) du bloc (41) s'étendant radialement vers l'intérieur depuis ledit côté axialement intérieur.

4. Pneumatique pour motocyclette selon l'une quelconque des revendications 1 à 3, dans lequel
le bloc médian (41) est pourvu d'une rainure (54) s'étendant depuis le côté axialement extérieur vers l'équateur de pneumatique (C) et se terminant à l'intérieur du bloc médian (41).

5. Pneumatique pour motocyclette selon l'une quelconque des revendications 1 à 4, dans lequel
le bloc d'épaulement (41) est pourvu d'une rainure (68) s'étendant depuis le côté axialement extérieur vers l'équateur de pneumatique (C) et se terminant à l'intérieur du bloc d'épaulement (61).

6. Pneumatique pour motocyclette selon l'une quelconque des revendications 1 à 5, dans lequel
le fond (13) de la portion formant bande de roulement (2) est pourvu de barrettes de liaison (55) qui se projettent radialement vers l'extérieur depuis le fond (13) de la portion formant bande de roulement (2) et assurent une connexion entre les faces de paroi latérale des blocs médians (41) et les faces de paroi latérale des blocs d'épaulement (61).
